# FASCICULE DE BREVET EUROPEEN

(11) **EP 3 471 124 B1**
(45) Date de publication et mention de la délivrance du brevet: **29.07.2020**
(21) Numéro de dépôt: 18187547.7
(22) Date de dépôt: 06.08.2018
(51) Int. Cl.: H01H 15/06, H01H 1/44

(54) **SECTIONNEUR D'ALIMENTATION ÉLECTRIQUE POUR UN MODULE DE PROTECTION ET MODULE DE PROTECTION COMPORTANT UN TEL SECTIONNEUR**
TRENNSCHALTER DER ELEKTRISCHEN VERSORGUNG FÜR EIN SCHUTZMODUL, UND SCHUTZMODUL, DAS EINEN SOLCHEN TRENNSCHALTER UMFASST
POWER SUPPLY SWITCH FOR A PROTECTION MODULE AND PROTECTION MODULE COMPRISING SUCH A SWITCH

(30) Priorité: 16.10.2017 FR 1759656
(43) Date de publication de la demande: 17.04.2019
(73) Titulaire: Schneider Electric Industries SAS, 92500 Rueil-Malmaison (FR)
(72) Inventeur: BRASME, Frédéric, 38050 GRENOBLE (FR); MOLITON, Vivien, 38050 GRENOBLE (FR); LEFEVRE, Bruno, 38050 GRENOBLE (FR)
(74) Mandataire: Tripodi, Paul

(56) Documents cités:
- DE-B1- 1 540 327
- FR-A5- 2 092 263

## Description

### DOMAINE TECHNIQUE

La présente invention concerne un sectionneur d'alimentation utilisé dans module de protection contre des défauts électriques pour établir ou couper la connexion entre des conducteurs de courant et un circuit d'alimentation dudit module de protection. L'invention concerne également un module de protection comportant un tel sectionneur d'alimentation.

### ETAT DE LA TECHNIQUE

Généralement, une installation électrique comporte un ou plusieurs dispositifs de protection contre les surintensités ou les défauts à la terre. De tels dispositifs sont adaptés pour fonctionner dans une plage de tension adaptée à la tension nominale du réseau électrique sur lequel ils sont connectés, par exemple 400 Volts alternatifs. Cependant lors de test en tenue diélectrique de l'installation électrique, des tensions de test, très supérieures à la tension nominale ou de nature différente, sont appliquées sur des portions de l'installation électrique, par exemple 2 500 Volts alternatifs ou encore 500 Volts continus. Un dispositif de protection non adapté à la tenue des tensions de test doit donc être déconnecté pendant la durée du test. Afin de simplifier cette opération, il est connu de déconnecter uniquement certains circuits faisant partie du dispositif de protection.

La demande de brevet FR 2 992 093 A1 décrit un dispositif de déconnexion de la carte électronique d'alimentation d'un circuit de traitement du défaut dans un appareil de protection électrique.

La demande de brevet FR 2 848 722 A1 décrit un disjoncteur de fuite à la terre comportant un interrupteur pouvant être utilisé pour l'essai de rigidité diélectrique pour mettre sur « marche » ou « arrêt » un circuit d'alimentation en liaison avec la mise sur « marche » ou « arrêt » du contact principal. La demande de brevet JP 2004-319135 A décrit un dispositif semblable comportant plusieurs interrupteurs actionnés mécaniquement afin d'ouvrir ou fermer plusieurs conducteurs d'alimentation simultanément. FR-A-2092263 décrit un sectionneur connu de l'art antérieur.

Dans les documents connus de l'art antérieur, les interrupteurs peuvent être disposés parallèlement à la face avant de l'appareil de protection parce que peu d'informations ou de moyens de réglage sont disposés sur ladite face avant. Avec l'intégration de nouvelles fonctionnalités, l'accroissement de surface demandée par les moyens d'interface avec l'utilisateur et, dans le même temps, la nécessité de conserver des dimensions externes constantes afin de garantir une interchangeabilité avec des matériels antérieurs, nécessite une densification des composants dans l'appareil de protection.

Le but de l'invention est de fournir un sectionneur d'alimentation pour un module de protection contre des défauts électriques, de volume très compact, adapté à la tenue aux tensions de test diélectrique.

### EXPOSE DE L'INVENTION

Pour cela, l'invention décrit un sectionneur d'alimentation électrique utilisé dans un module de protection contre des défauts électriques pour établir ou couper la connexion entre des conducteurs de courant et un circuit d'alimentation, ledit sectionneur d'alimentation comprenant :
- un boitier de section rectangulaire, comportant une paroi haute et une paroi basse, les faces internes de la paroi haute et de la paroi basse se faisant face entre elles et délimitant un passage central orienté selon un axe central, la paroi basse portant sur sa face interne au moins une première lame de contact basse, la paroi haute portant sur sa face interne au moins une première lame de contact haute, ladite première lame de contact haute étant située en vis-à-vis de la première lame de contact basse selon un axe de contact, et
- une coulisse agencée pour coulisser dans le passage central dans la direction de l'axe central, et adaptée pour supporter au moins un premier barreau conducteur de l'électricité, ledit premier barreau étant orienté selon l'axe de contact et agencé pour connecter électriquement la première lame de contact basse et la première lame de contact haute quand ladite coulisse est dans une première position.

Avantageusement, la première lame de contact basse et la première lame de contact haute comportent un bossage élastique adapté pour exercer un effort de pression sur le premier barreau quand ledit premier barreau est dans la première position.

Avantageusement, la coulisse est agencée pour coulisser dans le passage central de la première position vers une seconde position pour mettre le premier barreau hors de contact avec la première lame de contact basse et avec la première lame de contact haute.

De préférence, la coulisse comporte une butée agencée pour arrêter le déplacement de la coulisse dans la première position quand la coulisse est déplacée dans le passage central de la seconde position vers la première position.

Avantageusement, la coulisse comporte des angles externes arrondis et le passage central comporte des angles internes arrondis pour centrer la coulisse selon l'axe central dans le passage central.

Dans un mode de réalisation préférentiel, la coulisse comporte au moins une cavité traversante, orientée selon l'axe de contact, dans laquelle est inséré le premier barreau, et au moins une ouverture latérale traversante, orientée perpendiculairement à l'axe de contact, l'ouverture latérale traversante débouchant dans la cavité traversante, et le barreau comporte une excroissance s'étendant dans l'ouverture latérale traversante pour immobiliser le premier barreau dans la coulisse.

Préférentiellement :
- la paroi basse porte une seconde lame de contact basse et une seconde lame de contact haute, ladite seconde lame de contact haute étant située en vis-à-vis de la seconde lame de contact basse selon une direction parallèle à l'axe de contact, et
- la coulisse est adaptée pour supporter un second barreau, le premier barreau et le second barreau étant agencés pour que :
   - le premier barreau assure un contact électrique entre la première lame de contact basse et la première lame de contact haute et que le second barreau assure un contact électrique entre la seconde lame de contact basse et la seconde lame de contact haute quand la coulisse est en première position, et que
   - le premier barreau est hors contact avec la première lame de contact basse et la première lame de contact haute et que le second barreau est hors contact avec la seconde lame de contact basse et la seconde lame de contact haute quand la coulisse est en seconde position.

Avantageusement une première distance entre la première lame de contact basse et la seconde lame de contact basse est supérieure ou égale à une deuxième distance entre la première lame de contact basse et la première lame de contact haute.

Avantageusement une troisième distance entre le premier barreau et la première lame de contact basse ou la première lame de contact haute est supérieure à la moitié de la deuxième distance quand le premier barreau est en seconde position.

Préférentiellement, le sectionneur d'alimentation électrique selon l'invention comprend, en outre, une tige de manœuvre, et la coulisse comporte des premiers crochets disposés à une de ses extrémités pour former un premier dispositif d'accrochage à la tige de manœuvre.

Avantageusement, la tige de manœuvre comporte des seconds crochets à une de ses extrémités pour former un second dispositif d'accrochage coopérant avec les premiers crochets du premier dispositif d'accrochage, les seconds crochets étant agencés pour s'accrocher aux premiers crochets au cours d'une translation selon l'axe central pour solidariser mécaniquement la tige de manœuvre et la coulisse.

Avantageusement, les premiers crochets et/ou les seconds crochets sont agencés pour se déformer lors d'une manœuvre d'accrochage entre la coulisse et la tige de manœuvre et reprendre leur forme d'origine pour rester accrochés les uns aux autres afin de solidariser mécaniquement la tige de manœuvre et la coulisse.

Préférentiellement, la tige de manœuvre comporte un ressort orienté selon l'axe central, exerçant une poussée sur la tige de manœuvre pour entraîner la coulisse solidarisée mécaniquement à la tige de manœuvre de la première position à la seconde position.

De préférence, la tige de manœuvre comporte un verrou rotatif agencé pour maintenir la coulisse solidarisée mécaniquement à la tige de manœuvre dans la première position quand le verrou rotatif est dans une position verrouillée.

Avantageusement, le ressort exerce la poussée sur la tige de manœuvre pour entraîner la coulisse, solidarisée mécaniquement à la tige de manœuvre, de la première position à la seconde position quand le verrou rotatif est dans une position déverrouillée.

L'invention a également pour objet un module de protection contre les défauts électriques destiné à coopérer avec un dispositif de coupure de courant électrique, ledit module de protection comportant :
- au moins un capteur disposé autour d'au moins un conducteur de courant pour fournir un signal représentatif du courant électrique,
- une unité de traitement, connectée au capteur, pour traiter le signal issu du capteur et élaborer une mesure,
- un circuit d'alimentation de l'unité de traitement, et
- des conducteurs de courant,
- un sectionneur d'alimentation électrique tel que décrit précédemment, connecté en série entre le au moins un conducteur de courant et le circuit d'alimentation de l'unité de traitement pour établir ou couper la connexion entre le, au moins un, conducteur de courant et le circuit d'alimentation.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1A est une représentation schématique d'un sectionneur d'alimentation électrique représenté dans une première position,
- la figure 1B est une représentation schématique du sectionneur d'alimentation électrique représenté dans une seconde position,
- la figure 2A est une représentation schématique du sectionneur d'alimentation électrique, selon un mode de réalisation préférentiel, représenté dans la première position,
- la figure 2B est une représentation schématique du sectionneur d'alimentation électrique, selon un mode de réalisation préférentiel, représenté dans la seconde position,
- la figure 3 est une représentation schématique du sectionneur d'alimentation électrique, représenté dans la seconde position, portant les lignes et repères de cote faisant partie des caractéristiques techniques de l'invention,
- la figure 4 est une vue en éclaté d'une coulisse faisant partie du sectionneur d'alimentation électrique,
- la figure 5 est une vue en perspective du sectionneur d'alimentation électrique selon un mode de réalisation préférentiel de l'invention montrant un boitier et la coulisse,
- la figure 6 est une vue en perspective pour montrer un accrochage mécanique de la coulisse avec une tige de manœuvre,
- la figure 7A est une vue en perspective montrant le sectionneur d'alimentation et la tige de manœuvre dans la première position ,
- la figure 7B est une vue en perspective montrant le sectionneur d'alimentation accroché à la tige de manœuvre dans la seconde position,
- la figure 8 est une vue en éclaté du boitier du sectionneur d'alimentation électrique,
- la figure 9 est une représentation schématique de l'association d'un module de protection comportant un sectionneur d'alimentation pour sa propre alimentation électrique, et d'un dispositif de coupure destiné à éliminer un défaut électrique sur des lignes de courant.

### DESCRIPTION DETAILLEE DE MODES DE REALISATION PREFERES

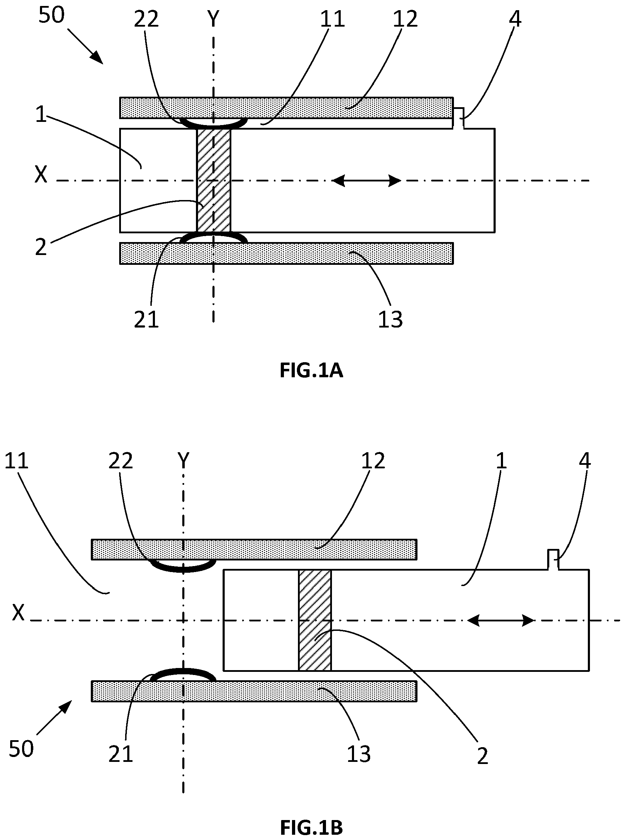

Un sectionneur d'alimentation électrique est utilisé tout particulièrement dans un module de protection contre des défauts électriques pour établir ou couper la connexion entre des conducteurs de courant et un circuit d'alimentation. Cette fonctionnalité est importante car elle permet de déconnecter le circuit d'alimentation au cours de tests diélectriques. La figure 1A est une représentation schématique du sectionneur d'alimentation électrique 50 représenté dans une première position. Ledit sectionneur est composé principalement de deux parties : un boitier 10 et une coulisse 1. Le boitier 10, de section préférentiellement rectangulaire et de forme sensiblement parallélépipédique, comporte un passage central 11 orienté selon un axe central X. Le boitier 10 est formé de parois dont les faces internes, tournées vers l'axe central X, délimitent le passage central 11. Une paroi basse 13 présente une face interne en vis-à-vis d'une face interne d'une paroi haute 12. Deux parois latérales, non représentées sur la figure 1A, se font face entre elles. Les deux autres faces sont préférentiellement ouvertes. La paroi basse 13 porte sur sa face interne au moins une première lame de contact basse 21, en matière conductrice de l'électricité, et la paroi haute 12 porte sur sa face interne au moins une première lame de contact haute 22, en matière conductrice de l'électricité, ladite première lame de contact haute 22 étant située en vis-à-vis de la première lame de contact basse 21 selon un axe de contact Y.

La coulisse 1 est agencée pour coulisser dans le passage central 11 dans la direction de l'axe central X, et adaptée pour supporter au moins un premier barreau 2 en matière conductrice de l'électricité, ledit premier barreau 2 étant orienté selon l'axe de contact Y de façon à connecter électriquement la première lame de contact basse 21 et la première lame de contact haute 22 quand la coulisse 1 est dans une première position, ainsi que représenté en figure 1A. La première lame de contact basse 21, le barreau 2 et la première lame de contact haute 22 sont alignés selon l'axe Y. La direction de l'axe X et la direction de l'axe Y sont préférentiellement sensiblement perpendiculaire. Le barreau 2 est préférentiellement affleurant à la surface de la coulisse, il peut être légèrement saillant afin d'assurer un bon contact électrique avec tout type de lame de contact basse 21 ou haute 22. Pour garantir un contact durable et procurant une sensation tactile lors d'une manœuvre, au moins une parmi la première lame de contact basse 21 ou la première lame de contact haute 22 comporte un bossage élastique adapté pour exercer un effort de pression sur le premier barreau 2 quand ledit premier barreau 2 est dans la première position. Préférentiellement, le bossage élastique est réalisé en donnant à chaque lame de contact 21, 22, une forme d'une languette souple.

Dans la première position, un parmi les conducteurs de courant étant connecté à une des lames de contact respectivement 21 ou 22, et l'autre des lames de contact respectivement 22 ou 21 étant connectée à un circuit d'alimentation, le circuit d'alimentation est alimenté en énergie électrique par le conducteur de courant.

La coulisse 1 est agencée pour coulisser dans le passage central 11 de la première position vers une seconde position pour mettre le premier barreau 2 hors de contact avec la première lame de contact basse 21 et avec la première lame de contact haute 22. Ainsi, le circuit d'alimentation n'est pas alimenté en énergie électrique. La figure 1B est une représentation schématique du sectionneur d'alimentation électrique 50 représenté dans la seconde position.

La manœuvre de la coulisse peut être exécutée successivement de la première position vers la seconde position et inversement. Le passage central 11 ne comporte préférentiellement pas de face traversée par l'axe central X afin de ne pas imposer un sens particulier de montage. En contrepartie, la coulisse 1 comporte une butée 4 agencée pour arrêter le déplacement de la coulisse 1 dans la première position quand la coulisse 1 est déplacée dans le passage central 11 de la seconde position vers la première position. Le positionnement précis du barreau 2 dans l'axe de contact Y est ainsi assuré quand la coulisse 1 est dans la première position.

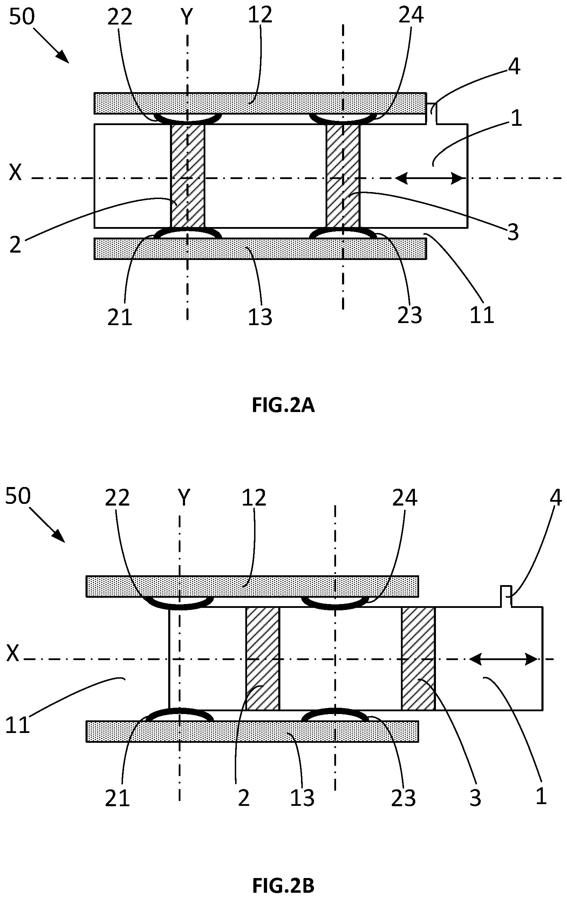

L'invention est particulièrement destinée à établir ou couper la connexion entre des conducteurs de courant d'un réseau triphasé et un circuit d'alimentation, il est donc nécessaire de pouvoir couper la connexion avec au moins deux conducteurs de courant. La figure 2A est une représentation schématique du sectionneur d'alimentation électrique 50, représenté dans la première position, selon un mode de réalisation préférentiel d'agencement, pour établir la connexion avec deux conducteurs de courant, et la figure 2B est une représentation schématique du sectionneur d'alimentation électrique, selon un mode de réalisation préférentiel, représenté dans la seconde position. La paroi basse 13 porte une seconde lame de contact basse 23 et la paroi haute 12 porte une seconde lame de contact haute 24, ladite seconde lame de contact haute 24 étant située en vis-à-vis de la seconde lame de contact basse 23 selon une direction parallèle à l'axe de contact Y. La coulisse 1 est adaptée pour supporter un second barreau 3. Le premier barreau 2 et le second barreau 3 étant agencés pour que :
- le premier barreau 2 assure un contact électrique entre la première lame de contact basse 21 et la première lame de contact haute 22 et que le second barreau 3 assure un contact électrique entre la seconde lame de contact basse 23 et la seconde lame de contact haute 24 quand la coulisse 1 est en première position, comme illustré en figure 2A, et que
- le premier barreau 2 est hors contact avec la première lame de contact basse 21 et la première lame de contact haute 22 et que le second barreau 3 est hors contact avec la seconde lame de contact basse 23 et la seconde lame de contact haute 24 quand la coulisse 1 est en seconde position, comme illustré en figure 2B. Le premier barreau 2 ne vient pas en contact avec lames de contact 23 et 24 quand la coulisse est en seconde position.
Ainsi la connexion avec les deux conducteurs de courant est établie ou coupée simultanément au cours d'une seule manœuvre de la coulisse 1. Le risque de connexion d'un conducteur de courant avant l'autre est ainsi éliminé ce qui élimine le risque de surtension sur le circuit d'alimentation lors d'une manœuvre de la coulisse 1.

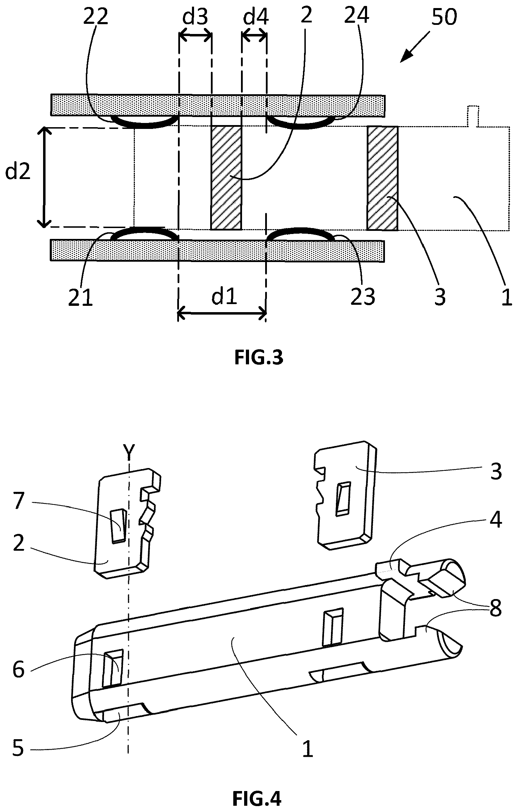

Le sectionneur d'alimentation électrique 50 est conçu pour tenir des tests en tenue diélectrique : il ne doit pas y avoir d'amorçage d'arc entre les différents contacts lors des essais. La figure 3 est une représentation schématique du sectionneur d'alimentation électrique, représenté dans la seconde position, portant des lignes et repères des cotes faisant partie des caractéristiques techniques de l'invention. Afin de ne pas créer un amorçage d'arc entre les conducteurs de courant connectés aux lames de contact 21 et 23 ou entre les conducteurs de courant connectés aux lames de contact 22 et 24, une première distance d1 entre la première lame de contact basse 21 et la seconde lame de contact basse 23 est supérieure ou égale à une deuxième distance d2 entre la première lame de contact basse 21 et la première lame de contact haute 22. La lame de contact haute 24 étant située en vis-à-vis de la seconde lame de contact basse 23 selon une direction parallèle à l'axe de contact Y, on retrouve la première distance d1 entre la première lame de contact haute 22 et la seconde lame de contact haute 24. Pour éviter que le barreau 2 ne devienne un point d'amorçage entre la première lame de contact basse 21 et la première lame de contact haute 22, une troisième distance d3 entre le premier barreau 2 et la première lame de contact basse 21 ou la première lame de contact haute 22 est supérieure à la moitié de la deuxième distance d2 entre la première lame de contact basse 21 et la première lame de contact haute 22 quand le premier barreau 2 est en seconde position. De la même façon, pour éviter que le barreau 2 ne devienne un point d'amorçage entre la seconde lame de contact basse 23 et la seconde lame de contact haute 24, une quatrième distance d4 entre le premier barreau 2 et la seconde lame de contact haute 24 ou la seconde lame de contact haute 24 est supérieure à la moitié de la deuxième distance d2 quand le premier barreau 2 est en seconde position. Préférentiellement, d1 est supérieure ou égale à 3,2 mm, d2 est supérieure ou égale à 3,2 mm, d3 et d4 sont supérieures ou égales à 1,6 mm. En variante, pour augmenter la deuxième distance d2 sans augmenter la distance entre la paroi basse 13 et la paroi haute 12, les lames de contact hautes 22, 24 et les lames de contact basses 21, 23 peuvent être décalées de manière à incliner la direction de l'axe de contact Y par rapport à la direction de l'axe central X. Dans ce cas, la distance d1 devant servir de référence sera la plus petite des distances entre, soit la première lame de contact haute 22 et la seconde lame de contact basse 23, soit la distance entre la première lame de contact basse 21 et la seconde lame de contact haute 24.

Le sectionneur d'alimentation électrique 50 n'est pas prévu pour exécuter un nombre de manœuvre important pendant la durée de vie du module de protection. Il est cependant nécessaire que le déplacement de la coulisse 1 dans le passage central 11 pour passer de la première position à la seconde position ne présente pas de résistance inutile. Pour cela, la coulisse 1 comporte des angles externes arrondis et le passage central 11 comporte des angles internes arrondis à la jonction entre deux faces. De cette façon, la coulisse 1 est centrée selon l'axe central X dans le passage central 11 et les frottements entre la coulisse 1 et l'intérieur du boitier 10 sont minimisés. La figure 4 illustre particulièrement l'arrondi des angles externes de la coulisse 1. La figure 4 est une vue en éclaté illustrant la constitution de la coulisse 1. La coulisse 1 supporte au moins un premier barreau 2 : le premier barreau est inséré dans la coulisse, maintenu en place pour être solidaire de la coulisse et suivre les mêmes déplacements que la coulisse 1, sans changer d'orientation ni de position. Pour cela, la coulisse 1 comporte au moins une cavité traversante 5, orientée selon l'axe de contact Y. Le premier barreau 2 est inséré dans la cavité traversante 5. Une ouverture latérale traversante 6, orientée perpendiculairement à l'axe de contact Y, débouche dans la cavité traversante 5. Le barreau 2 comporte une excroissance 7 s'étendant dans l'ouverture latérale traversante 6 pour immobiliser le premier barreau 2 dans la coulisse 1. Ainsi, quand le barreau 2 est inséré dans la cavité traversante 5, l'excroissance 7 exerce une force de frottement importante tant que l'excroissance 7 n'est pas positionnée dans l'ouverture latérale 6. Lorsque l'excroissance 7 est positionnée dans l'ouverture latérale 6, le barreau 2 est immobilisé correctement dans la coulisse, c'est-à-dire que le barreau 2 est affleurant à la surface de la coulisse ou légèrement saillant afin d'assurer un bon contact électrique les lames de contact basse 21 et haute 22 quand la coulisse 1 est en première position. La coulisse 1 peut supporter plusieurs barreaux, au moins un premier barreau 2 et par exemple un second barreau 3 tel qu'illustré par la figure 4. D'autre modes de réalisation de la coulisse 1 équipée d'au moins un barreau conducteur 2 peuvent être envisagés : surmoulage de la coulisse 1 autour d'au moins un premier barreau 2 ou par impression 3D ou encore par utilisation d'une bague en métal conducteur en lieu et place du barreau.

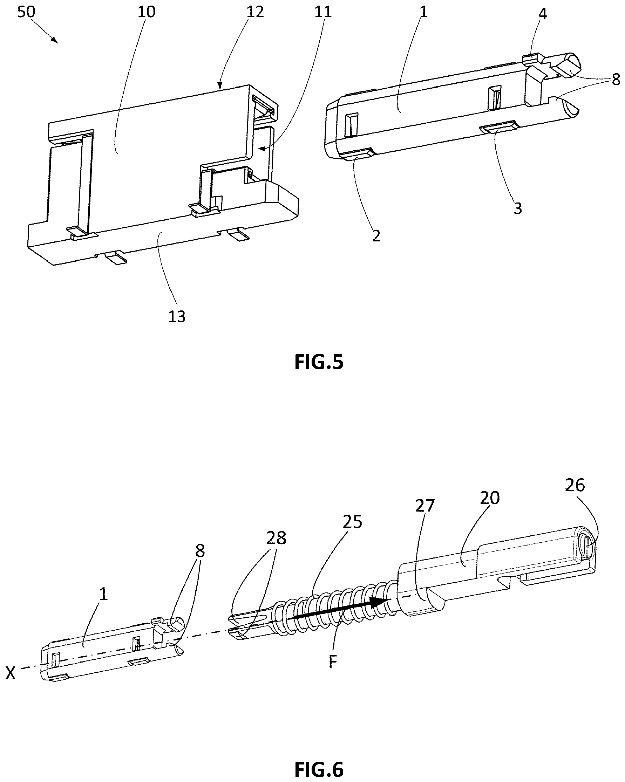

La figure 5 est une vue en perspective du sectionneur d'alimentation électrique 50 selon un mode de réalisation préférentiel de l'invention comportant un boitier 10 et la coulisse 1. Le sectionneur d'alimentation électrique 50 de l'invention est destiné à être implanté dans un module de protection contre des défauts électriques dans lequel l'espace est limité et doit être localisé au plus près des conducteurs de courant. D'autre part, le sectionneur doit pouvoir être manœuvré par un opérateur, en toute sécurité, d'une manière simple accessible en face avant du module de protection. Pour cela, le sectionneur d'alimentation électrique 50 de l'invention comprend, en outre, une tige de manœuvre 20. Selon l'invention, la coulisse 1 comporte des premiers crochets 8 disposés à une de ses extrémités pour former un premier dispositif d'accrochage avec la tige de manœuvre 20. La figure 6 est une vue en perspective pour montrer un accrochage mécanique de la coulisse et d'une tige de manœuvre. La tige de manœuvre 20 comporte des seconds crochets 28 à une de ses extrémités pour former un second dispositif d'accrochage coopérant avec les premiers crochets 8 du premier dispositif d'accrochage de la coulisse 1. Les seconds crochets 28 étant agencés pour s'accrocher aux premiers crochets 8 au cours d'une translation selon l'axe central X pour solidariser mécaniquement la tige de manœuvre 20 et la coulisse 1. En référence à la figure 6, lors de la manœuvre d'accrochage entre la coulisse 1 et la tige de manœuvre 20, les seconds crochets 28 se déforment légèrement en se rapprochant l'un de l'autre au moment où ils entrent en contact avec les crochets 8 de la coulisse 1. L'extrémité des crochets 8 et 28 est biseautée afin d'orienter le mouvement des crochets dans le sens adapté. Quand la coulisse 1 et la tige de manœuvre 20 ont terminé leur mouvement, les premiers crochets 8 et les seconds crochets 28 reprennent leur forme d'origine pour rester accrochés les uns aux autres afin de solidariser mécaniquement la tige de manœuvre 20 et la coulisse 1. Ainsi la coulisse 1 peut être manœuvrée au moyen de la tige de manœuvre 20. Tout autre type d'accrochage peut être envisagé par exemple en donnant aux premiers crochets 8 une forme d'anneau ou de sphère et en donnant aux seconds crochets 28 une forme adaptée pour coopérer avec les premiers crochets 8.

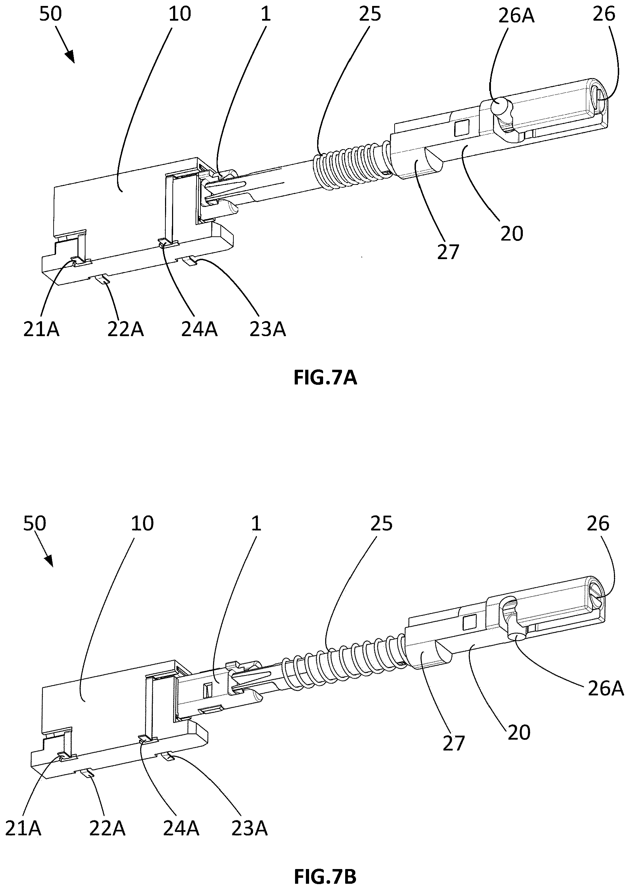

La tige de manœuvre 20 comporte également un ressort 25 orienté selon l'axe central X, exerçant une poussée F sur la tige de manœuvre 20 pour entraîner la coulisse 1 solidarisée mécaniquement à la tige de manœuvre 20 de la première position vers la seconde position. Un verrou 26 est agencé dans la tige de manœuvre 20 pour maintenir la coulisse 1 dans la première position. Le verrou 26 comporte une partie centrale cylindrique orientée selon la direction de l'axe central X et mobile en rotation autour de l'axe central X. Un téton 26A fait saillie sur une extrémité du verrou 26 pour se loger dans une encoche d'un boitier du module de protection 30 afin de verrouiller la position de la coulisse 1 dans la première position telle que représentée en figure 7A. Une rotation du verrou 26 vers une position déverrouillée libère le verrouillage opéré par le téton 26A. Le ressort 25 exerce la poussée F sur la tige de manœuvre 20 pour pousser la tige de manœuvre 20 et la coulisse 1 solidarisée mécaniquement vers la seconde position telle que représentée en figure 7B. La tige de manœuvre dispose d'un épaulement 27 pour limiter le déplacement dans le sens X et empêcher une sortie de la tige de manœuvre 20 hors du module de protection. L'épaulement 27 vient en butée contre la face avant du module de protection, non représentée sur les figures.

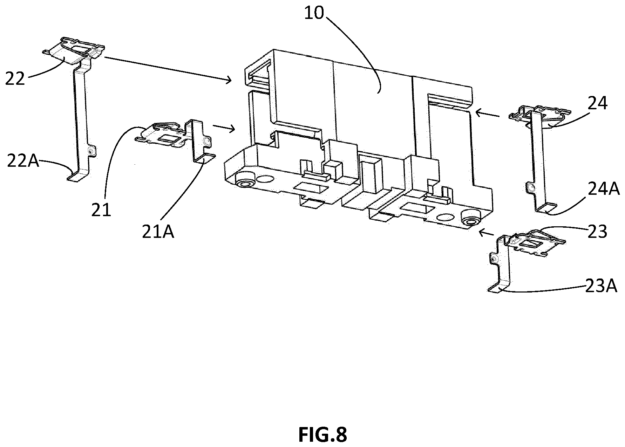

Le sectionneur d'alimentation est préférentiellement destiné à être soudé sur une carte de circuit imprimé selon la technologie de montage en surface CMS. Avantageusement, la carte de circuit imprimé peut être disposée dans un plan parallèle à l'axe central X. La figure 8 est une vue en éclaté du boitier 10 pour illustrer le raccordement des lames de contact vers l'extérieur dudit boitier 10. La première lame de contact basse 21 est reliée à une patte de soudage 21A, la première lame de contact haute 22 est reliée à une patte de soudage 22A, la seconde lame de contact basse 23 est reliée à une patte de soudage 23A et la seconde lame de contact haute 24 est reliée à une patte de soudage 24A. Préférentiellement, pour réduire le cout de chaque pièce et limiter la variété des pièces, les pattes de soudage 21A et 23A sont identiques entre elles ; Il en est de même pour les pattes de soudage 22A et 24A.

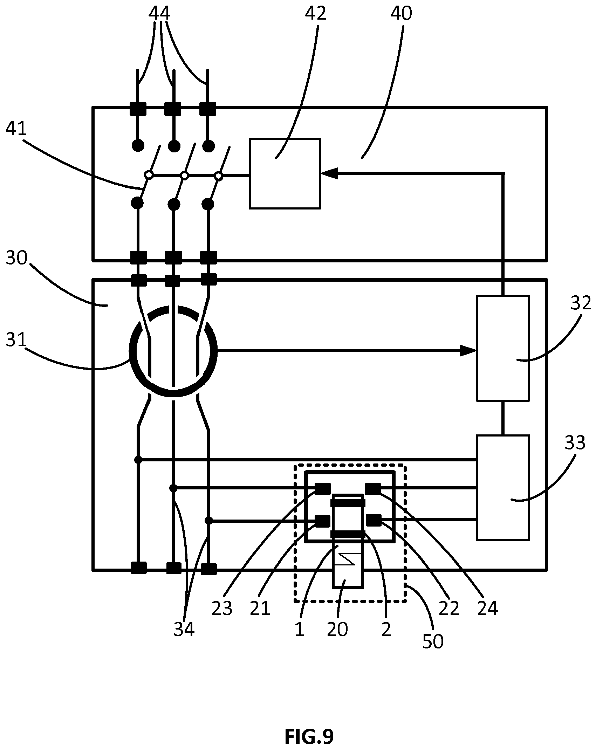

Le module de protection contre les défauts électriques 30 est agencé pour coopérer avec un dispositif de coupure de courant électrique 40 afin d'assurer une protection de l'installation électrique dans le cas d'un défaut d'origine électrique. La figure 9 est une représentation schématique d'un module de protection 30, associé à un dispositif de coupure 40. L'association du module de protection 30 et du dispositif de coupure de courant électrique 40 forme un appareil appelé généralement « disjoncteur » ou « interrupteur ». Le dispositif de coupure de courant électrique 40 est connecté à au moins deux lignes électriques 44, et comporte un actionneur 42 pour commander l'ouverture de contacts de puissance 41. Le sectionneur d'alimentation électrique 50 selon l'invention est destiné à être utilisé préférentiellement dans le module de protection contre des défauts électriques 30, appelé aussi « déclencheur », pour établir ou couper la connexion entre des conducteurs de courant 34 et un circuit d'alimentation 33. La connexion est établie quand la coulisse 1 est en première position, la connexion est coupée quand la coulisse est en seconde position. Les lignes de courant 44 sont reliées par des connexions aux conducteurs de courant 34 quand le module de protection 30 coopère avec le dispositif de coupure de courant électrique 40. Le module de protection contre les défauts électriques 30 comporte une unité de traitement 32, un circuit d'alimentation 33 de l'unité de traitement 32 et un sectionneur d'alimentation électrique 50 selon l'invention. Le sectionneur d'alimentation électrique 50 est connecté en série entre au moins un conducteur de courant 34 et le circuit d'alimentation 33. Avantageusement, le sectionneur d'alimentation est connecté à deux phases d'un réseau triphasé. Le sectionneur d'alimentation électrique 50 établit ou coupe la connexion entre les conducteurs de courant 34 et le circuit d'alimentation 33 pour éviter d'endommager le circuit d'alimentation 33 par exemple lors de tests diélectriques. Le circuit d'alimentation 33 alimente le circuit de traitement 32 relié à au moins un capteur de courant 31. Le capteur de courant 31 est disposé autour d'au moins un conducteur de courant 34 pour fournit un signal représentatif du courant électrique circulant dans les lignes de courant 44 à l'unité de traitement 32. Quand un défaut électrique est présent sur au moins une ligne de courant 44, l'unité de traitement 32 envoie un ordre d'ouverture du circuit électrique à un actionneur 42 pour commander l'ouverture des contacts de puissance 41. Ainsi le défaut électrique est éliminé. Le sectionneur d'alimentation de l'invention peut facilement être adapté pour couper la connexion entre trois conducteurs de courant 34 et un circuit d'alimentation en ajoutant une lame de contact haute et une lame de contact basse au boitier 10 et un barreau supplémentaire à la coulisse 1.

Le sectionneur d'alimentation électrique 50 de l'invention est particulièrement adapté à la connexion d'un circuit d'alimentation à des conducteurs de courant dans un module de protection contre les défauts électriques : le déplacement de la coulisse 1 portant un ou plusieurs barreaux de contact 2, 3 le long d'un axe central X permet une grande compacité du sectionneur. Une telle conception innovante permet de disposer de distances d1, d2 et d3 suffisantes entre les différentes lames de contact 21, 22, 23, 24 pour garantir une bonne isolation des contacts, quand le sectionneur est dans la seconde position, lors des tests diélectriques. Enfin, la simplicité de conception rend économique la réalisation industrielle du sectionneur d'alimentation.

## Revendications

1. Sectionneur d'alimentation électrique (50) utilisé dans un module de protection contre des défauts électriques (30) pour établir ou couper la connexion entre des conducteurs de courant et un circuit d'alimentation, ledit sectionneur d'alimentation étant **caractérisé en ce qu'**il comprend :
- un boitier (10) de section rectangulaire, comportant une paroi haute (12) et une paroi basse (13), les faces internes de la paroi haute (12) et de la paroi basse (13) se faisant face entre elles et délimitant un passage central (11) orienté selon un axe central (X), la paroi basse (13) portant sur sa face interne au moins une première lame de contact basse (21), la paroi haute (12) portant sur sa face interne au moins une première lame de contact haute (22), ladite première lame de contact haute (22) étant située en vis-à-vis de la première lame de contact basse (21) selon un axe de contact (Y), et
- une coulisse (1) agencée pour coulisser dans le passage central (11) dans la direction de l'axe central (X),
**caractérisé en ce que** la coulisse (1) est adaptée pour supporter au moins un premier barreau (2) conducteur de l'électricité, ledit premier barreau (2) étant orienté selon l'axe de contact (Y) et agencé pour connecter électriquement la première lame de contact basse (21) et la première lame de contact haute (22) quand ladite coulisse (1) est dans une première position.

2. Sectionneur d'alimentation électrique (50) selon la revendication 1 **caractérisé en ce que** la première lame de contact basse (21) et la première lame de contact haute (22) comportent un bossage élastique adapté pour exercer un effort de pression sur le premier barreau (2) quand ledit premier barreau (2) est dans la première position.

3. Sectionneur d'alimentation électrique (50) selon l'une des revendications 1 ou 2 **caractérisé en ce que** la coulisse (1) est agencée pour coulisser dans le passage central (11) de la première position vers une seconde position pour mettre le premier barreau (2) hors de contact avec la première lame de contact basse (21) et avec la première lame de contact haute (22).

4. Sectionneur d'alimentation électrique (50) selon la revendication 3 **caractérisé en ce que** la coulisse (1) comporte une butée (4) agencée pour arrêter le déplacement de la coulisse (1) dans la première position quand la coulisse (1) est déplacée dans le passage central (11) de la seconde position vers la première position.

5. Sectionneur d'alimentation électrique (50) selon l'une quelconque des revendications 1 à 4 **caractérisé en ce que** la coulisse (1) comporte des angles externes arrondis et que le passage central (11) comporte des angles internes arrondis pour centrer la coulisse (1) selon l'axe central (X) dans le passage central (11).

6. Sectionneur d'alimentation électrique (50) selon l'une quelconque des revendications 1 à 5 **caractérisé en ce que** :
- la coulisse (1) comporte au moins une cavité traversante (5), orientée selon l'axe de contact (Y), dans laquelle est inséré le premier barreau (2), et au moins une ouverture latérale traversante (6), orientée perpendiculairement à l'axe de contact (Y), l'ouverture latérale traversante (6) débouchant dans la cavité traversante (5), et que
- le barreau (2) comporte une excroissance (7) s'étendant dans l'ouverture latérale traversante (6) pour immobiliser le premier barreau (2) dans la coulisse (1).

7. Sectionneur d'alimentation électrique (50) selon l'une quelconque des revendications 1 à 6 **caractérisé en ce que** :
- la paroi basse (13) porte une seconde lame de contact basse (23) et une seconde lame de contact haute (24), ladite seconde lame de contact haute (24) étant située en vis-à-vis de la seconde lame de contact basse (23) selon une direction parallèle à l'axe de contact (Y),
- la coulisse (1) est adaptée pour supporter un second barreau (3), le premier barreau (2) et le second barreau (3) étant agencés pour que :
- le premier barreau (2) assure un contact électrique entre la première lame de contact basse (21) et la première lame de contact haute (22) et que le second barreau (3) assure un contact électrique entre la seconde lame de contact basse (23) et la seconde lame de contact haute (24) quand la coulisse (1) est en première position et que
- le premier barreau (2) est hors contact avec la première lame de contact basse (21) et la première lame de contact haute (22) et que le second barreau (3) est hors contact avec la seconde lame de contact basse (23) et la seconde lame de contact haute (24) quand la coulisse (1) est en seconde position.

8. Sectionneur d'alimentation électrique (50) selon la revendication 7 **caractérisé en ce qu'**une première distance (d1) entre la première lame de contact basse (21) et la seconde lame de contact basse (23) est supérieure ou égale à une deuxième distance (d2) entre la première lame de contact basse (21) et la première lame de contact haute (22).

9. Sectionneur d'alimentation électrique (50) selon l'une quelconque des revendications 7 ou 8 **caractérisé en ce qu'**une troisième distance (d3) entre le premier barreau (2) et la première lame de contact basse (21) ou la première lame de contact haute (22) est supérieure à la moitié de la deuxième distance (d2) quand le premier barreau (2) est en seconde position.

10. Sectionneur d'alimentation électrique (50) selon l'une quelconque des revendications 1 à 9 **caractérisé en ce qu'**il comprend, en outre, une tige de manœuvre (20) et que la coulisse (1) comporte des premiers crochets (8) disposés à une de ses extrémités pour former un premier dispositif d'accrochage à la tige de manœuvre (20).

11. Sectionneur d'alimentation électrique (50) selon la revendication 10 **caractérisé en ce que** la tige de manœuvre (20) comporte des seconds crochets (28) à une de ses extrémités pour former un second dispositif d'accrochage coopérant avec les premiers crochets (8) du premier dispositif d'accrochage, les seconds crochets (28) étant agencés pour s'accrocher aux premiers crochets (8) au cours d'une translation selon l'axe central (X) pour solidariser mécaniquement la tige de manœuvre (20) et la coulisse (1).

12. Sectionneur d'alimentation électrique (50) selon la revendication 11 **caractérisé en ce que** les premiers crochets (8) et/ou les seconds crochets (28) sont agencés pour se déformer lors d'une manœuvre d'accrochage entre la coulisse (1) et la tige de manœuvre (20) et reprendre leur forme d'origine pour rester accrochés les uns aux autres afin de solidariser mécaniquement la tige de manœuvre (20) et la coulisse (1).

13. Sectionneur d'alimentation électrique (50) selon l'une quelconque des revendications 10 à 12 **caractérisé en ce que** la tige de manœuvre (20) comporte un verrou rotatif (26) agencé pour maintenir la coulisse (1) solidarisée mécaniquement à la tige de manœuvre (20) dans la première position quand le verrou rotatif (26) est dans une position verrouillée.

14. Sectionneur d'alimentation électrique (50) selon la revendication 13 **caractérisé en ce que** la tige de manœuvre (20) comporte un ressort (25) orienté selon l'axe central (X), exerçant une poussée (F) sur la tige de manœuvre (20) pour entraîner la coulisse (1) solidarisée mécaniquement à la tige de manœuvre (20) de la première position à la seconde position.

15. Sectionneur d'alimentation électrique (50) selon la revendication 14 **caractérisé en ce que** le ressort (25) exerce la poussée (F) sur la tige de manœuvre (20) pour entraîner la coulisse (1), solidarisée mécaniquement à la tige de manœuvre, de la première position à la seconde position quand le verrou rotatif (26) est dans une position déverrouillée.

16. Module de protection (30) contre les défauts électriques destiné à coopérer avec un dispositif de coupure de courant électrique (40), ledit module de protection (30) comportant :
- au moins un capteur (31) disposé autour d'au moins un conducteur de courant (34) pour fournir un signal représentatif du courant électrique,
- une unité de traitement (32), connectée au capteur (31), pour traiter le signal issu du capteur et élaborer une mesure,
- un circuit d'alimentation (33) de l'unité de traitement (32), et
- des conducteurs de courant (34),
ledit module de protection contre les défauts électriques étant **caractérisé en ce qu'**il comporte un sectionneur d'alimentation électrique (50) selon l'une quelconque des revendications 1 à 15, ledit sectionneur d'alimentation électrique (50) étant connecté en série entre le au moins un conducteur de courant (34) et le circuit d'alimentation (33) de l'unité de traitement (32) pour établir ou couper la connexion entre le, au moins un, conducteur de courant (34) et le circuit d'alimentation (33).

## Patentansprüche

1. Stromversorgungstrennschalter (50), der in einem elektrischen Schutzmodul (30) gegen elektrische Fehler verwendet wird, um die Verbindung zwischen Stromleitern und einem Versorgungskreis herzustellen oder zu unterbrechen, wobei der Stromversorgungstrennschalter **dadurch gekennzeichnet ist, dass** er Folgendes aufweist:
- ein Gehäuse (10) mit rechteckigem Querschnitt, das eine obere Wand (12) und eine untere Wand (13) aufweist, wobei die Innenflächen der oberen Wand (12) und der unteren Wand (13) einander zugewandt sind und einen zentralen Durchgang (11) begrenzen, der entlang einer zentralen Achse (X) ausgerichtet ist, wobei die untere Wand (13) auf ihrer Innenseite mindestens eine erste untere Kontaktfeder (21) trägt und die obere Wand (12) auf ihrer Innenseite mindestens eine erste obere Kontaktfeder (22) trägt, wobei sich die erste obere Kontaktfeder (22) gegenüber der ersten unteren Kontaktfeder (21) entlang einer Kontaktachse (Y) befindet, und
- einen Schieber (1), der angeordnet ist, um in dem zentralen Durchgang (11) in Richtung der zentralen Achse (X) zu gleiten,
**dadurch gekennzeichnet, dass** der Schieber (1) dazu geeignet ist, mindestens einen ersten elektrisch leitenden Stab (2) zu tragen, wobei der erste Stab (2) entlang der Kontaktachse (Y) ausgerichtet und angeordnet ist, um die erste untere Kontaktfeder (21) und die erste obere Kontaktfeder (22) elektrisch zu verbinden, wenn sich der Schieber (1) in einer ersten Position befindet.

2. Stromversorgungstrennschalter (50) nach Anspruch 1, **dadurch gekennzeichnet, dass** die erste untere Kontaktfeder (21) und die erste obere Kontaktfeder (22) einen elastischen Buckel aufweisen, der dazu geeignet ist, eine Druckkraft auf den ersten Stab (2) auszuüben, wenn sich der erste Stab (2) in der ersten Position befindet.

3. Stromversorgungstrennschalter (50) nach einem der Ansprüche 1 oder 2, **dadurch gekennzeichnet, dass** der Schieber (1) so angeordnet ist, dass er in dem zentralen Durchgang (11) von der ersten Position in eine zweite Position gleitet, um den ersten Stab (2) außer Kontakt mit der ersten unteren Kontaktfeder (21) und mit der ersten oberen Kontaktfeder (22) zu nehmen.

4. Stromversorgungstrennschalter (50) nach Anspruch 3, **dadurch gekennzeichnet, dass** der Schieber (1) einen Anschlag (4) aufweist, der angeordnet ist, um die Bewegung des Schiebers (1) in der ersten Position zu stoppen, wenn der Schieber (1) in dem zentralen Durchgang (11) von der zweiten Position zur ersten Position bewegt wird.

5. Stromversorgungstrennschalter (50) nach einem der Ansprüche 1 bis 4, **dadurch gekennzeichnet, dass** der Schieber (1) abgerundete Außenwinkel aufweist und dass der zentrale Durchgang (11) abgerundete Innenwinkel aufweist, um den Schieber (1) entlang der zentralen Achse (X) in dem zentralen Durchgang (11) zu zentrieren.

6. Stromversorgungstrennschalter (50) nach einem der Ansprüche 1 bis 5, **dadurch gekennzeichnet, dass**:
- der Schieber (1) mindestens einen durchgehenden Hohlraum (5) aufweist, der entlang der Kontaktachse (Y) ausgerichtet ist und in den der erste Stab (2) eingesetzt ist, und mindestens eine durchgehende seitliche Öffnung (6), die senkrecht zur Kontaktachse (Y) ausgerichtet ist, wobei die durchgehende seitliche Öffnung (6) in den durchgehenden Hohlraum (5) mündet, und dass
- der Stab (2) einen Vorsprung (7) aufweist, der sich in die durchgehende seitliche Öffnung (6) erstreckt, um den ersten Stab (2) in dem Schieber (1) zu fixieren.

7. Stromversorgungstrennschalter (50) nach einem der Ansprüche 1 bis 6, **dadurch gekennzeichnet, dass**:
- die untere Wand (13) eine zweite untere Kontaktfeder (23) und eine zweite obere Kontaktfeder (24) trägt, wobei sich die zweite obere Kontaktfeder (24) gegenüber der zweiten unteren Kontaktfeder (23) entlang einer Richtung parallel zur Kontaktachse (Y) befindet,
- der Schieber (1) dazu geeignet ist, einen zweiten Stab (3) zu tragen, wobei der erste Stab (2) und der zweite Stab (3) so angeordnet sind, dass:
- der erste Stab (2) einen elektrischen Kontakt zwischen der ersten unteren Kontaktfeder (21) und der ersten oberen Kontaktfeder (22) sicherstellt und dass der zweite Stab (3) einen elektrischen Kontakt zwischen der zweiten unteren Kontaktfeder (23) und der zweiten oberen Kontaktfeder (24) sicherstellt, wenn sich der Schieber (1) in der ersten Position befindet, und dass
- der erste Stab (2) außer Kontakt mit der ersten unteren Kontaktfeder (21) und der ersten oberen Kontaktfeder (22) ist und dass der zweite Stab (3) außer Kontakt mit der zweiten unteren Kontaktfeder (23) und der zweiten oberen Kontaktfeder (24) ist, wenn sich der Schieber (1) in der zweiten Position befindet.

8. Stromversorgungstrennschalter (50) nach Anspruch 7, **dadurch gekennzeichnet, dass** ein erster Abstand (d1) zwischen der ersten unteren Kontaktfeder (21) und der zweiten unteren Kontaktfeder (23) größer oder gleich einem zweiten Abstand (d2) zwischen der ersten unteren Kontaktfeder (21) und der ersten oberen Kontaktfeder (22) ist.

9. Stromversorgungstrennschalter (50) nach einem der Ansprüche 7 oder 8, **dadurch gekennzeichnet, dass** ein dritter Abstand (d3) zwischen dem ersten Stab (2) und der ersten unteren Kontaktfeder (21) oder der ersten oberen Kontaktfeder (22) größer als die Hälfte des zweiten Abstands (d2) ist, wenn sich der erste Stab (2) in der zweiten Position befindet.

10. Stromversorgungstrennschalter (50) nach einem der Ansprüche 1 bis 9, **dadurch gekennzeichnet, dass** er darüber hinaus eine Betätigungsstange (20) aufweist und dass der Schieber (1) erste Haken (8) aufweist, die an einem seiner Enden angeordnet sind, um eine erste Verankerungsvorrichtung an der Betätigungsstange (20) zu bilden.

11. Stromversorgungstrennschalter (50) nach Anspruch 10, **dadurch gekennzeichnet, dass** die Betätigungsstange (20) an einem ihrer Enden zweite Haken (28) aufweist, um eine zweite Verankerungsvorrichtung zu bilden, die mit den ersten Haken (8) der ersten Verankerungsvorrichtung zusammenarbeitet, wobei die zweiten Haken (28) so angeordnet sind, dass sie sich während einer translatorischen Verschiebung entlang der zentralen Achse (X) mit den ersten Haken (8) verankern, um die Betätigungsstange (20) und den Schieber (1) mechanisch zu verbinden.

12. Stromversorgungstrennschalter (50) nach Anspruch 11, **dadurch gekennzeichnet, dass** die ersten Haken (8) und/oder die zweiten Haken (28) so angeordnet sind, dass sie sich während eines Verankerungsvorgangs zwischen dem Schieber (1) und der Betätigungsstange (20) verformen und ihre ursprüngliche Form wieder annehmen, um miteinander verankert zu bleiben, um die Betätigungsstange (20) und den Schieber (1) mechanisch zu verbinden.

13. Stromversorgungstrennschalter (50) nach einem der Ansprüche 10 bis 12, **dadurch gekennzeichnet, dass** die Betätigungsstange (20) eine Drehsperre (26) aufweist, die angeordnet ist, um den Schieber (1) mechanisch mit der Betätigungsstange (20) in der ersten Position befestigt zu halten, wenn sich die Drehsperre (26) in einer gesperrten Position befindet.

14. Stromversorgungstrennschalter (50) nach Anspruch 13, **dadurch gekennzeichnet, dass** die Betätigungsstange (20) eine Feder (25) aufweist, die entlang der zentralen Achse (X) ausgerichtet ist und einen Schub (F) auf die Betätigungsstange (20) ausübt, um den mechanisch mit der Betätigungsstange (20) verbundenen Schieber (1) aus der ersten Position in die zweite Position zu bewegen.

15. Stromversorgungstrennschalter (50) nach Anspruch 14, **dadurch gekennzeichnet, dass** die Feder (25) den Schub (F) auf die Betätigungsstange (20) ausübt, um den mechanisch mit der Betätigungsstange verbundenen Schieber (1) aus der ersten Position in die zweite Position zu bewegen, wenn sich die Drehsperre (26) in einer entsperrten Position befindet.

16. Schutzmodul (30) gegen elektrische Fehler, das mit einer Stromabschaltvorrichtung (40) zusammenarbeiten soll, wobei das Schutzmodul (30) Folgendes aufweist:
- mindestens einen Sensor (31), der um mindestens einen Stromleiter (34) herum angeordnet ist, um ein Signal bereitzustellen, das für den elektrischen Strom repräsentativ ist,
- eine Verarbeitungseinheit (32), die mit dem Sensor (31) verbunden ist, um das vom Sensor ausgegebene Signal zu verarbeiten und eine Bewertung zu erstellen,
- ein Versorgungskreis (33) der Verarbeitungseinheit (32) und
- Stromleiter (34),
wobei das Schutzmodul gegen elektrische Fehler **dadurch gekennzeichnet ist, dass** es einen Stromversorgungstrennschalter (50) nach einem der Ansprüche 1 bis 15 aufweist, wobei der Stromversorgungstrennschalter (50) in Reihe zwischen dem mindestens einen Stromleiter (34) und dem Versorgungskreis (33) der Verarbeitungseinheit (32) geschaltet ist, um die Verbindung zwischen dem mindestens einen Stromleiter (34) und dem Versorgungskreis (33) herzustellen oder zu unterbrechen.

## Claims

1. Electrical power supply disconnector (50) used in a protection module protecting against electrical faults (30) to make or break the connection between current conductors and a power supply circuit, said power supply disconnector being **characterized in that** it comprises:
- a housing (10) of rectangular section, comprising a top wall (12) and a bottom wall (13), the internal faces of the top wall (12) and of the bottom wall (13) facing one another and delimiting a central passage (11) oriented along a central axis (X), the bottom wall (13) bearing, on its internal face, at least one bottom contact blade (21), the top wall (12) bearing, on its internal face, at least one first top contact blade (22), said first top contact blade (22) being situated facing the first bottom contact blade (21) along a contact axis (Y), and
- a slide (1) arranged to slide in the central passage (11) in the direction of the central axis (X),
**characterized in that** the slide (1) is adapted to support at least one first electricity-conducting bar (2), said first bar (2) being oriented along the contact axis (Y) and arranged to electrically connect the first bottom contact blade (21) and the first top contact blade (22) when said slide (1) is in a first position.

2. Electrical power supply disconnector (50) according to Claim 1, **characterized in that** the first bottom contact blade (21) and the first top contact blade (22) comprise an elastic boss suitable for exerting a pressing force on the first bar (2) when said first bar (2) is in the first position.

3. Electrical power supply disconnector (50) according to either of Claims 1 and 2, **characterized in that** the slide (1) is arranged to slide in the central passage (11) from the first position to a second position to set the first bar (2) out of contact with the first bottom contact blade (21) and with the first top contact blade (22).

4. Electrical power supply disconnector (50) according to Claim 3, **characterized in that** the slide (1) comprises an abutment (4) arranged to stop the displacement of the slide (1) in the first position with the slide (1) is displaced in the central passage (11) from the second position to the first position.

5. Electrical power supply disconnector (50) according to any one of Claims 1 to 4, **characterized in that** the slide (1) comprises rounded outer corners and the central passage (11) comprises rounded inner corners to centre the slide (1) along the central axis (X) in the central passage (11).

6. Electrical power supply disconnector (50) according to any one of Claims 1 to 5, **characterized in that**:
- the slide (1) comprises at least one through cavity (5), oriented along the contact axis (Y), into which the first bar (2) is inserted, and at least one through lateral opening (6), oriented at right angles to the contact axis (Y), the through lateral opening (6) emerging in the through cavity (5), and
- the bar (2) comprises a protuberance (7) extending into the through lateral opening (6) to immobilize the first bar (2) in the slide (1).

7. Electrical power supply disconnector (50) according to any one of Claims 1 to 6, **characterized in that**:
- the bottom wall (13) bears a second bottom contact blade (23) and a second top contact blade (24), said second top contact blade (24) being situated facing the second bottom contact blade (23) along a direction parallel to the contact axis (Y),
- the slide (1) is adapted to support a second bar (3), the first bar (2) and the second bar (3) being arranged so that:
- the first bar (2) ensures an electrical contact between the first bottom contact blade (21) and the first top contact blade (22) and the second bar (3) ensures an electrical contact between the second bottom contact blade (23) and the second top contact blade (24) when the slide (1) is in the first position, and
- the first bar (2) is out of contact with the first bottom contact blade (21) and the first top contact blade (22) and the second bar (3) is out of contact with the second bottom contact blade (23) and the second top contact blade (24) when the slide (1) is in the second position.

8. Electrical power supply disconnector (50) according to Claim 7, **characterized in that** a first distance (d1) between the first bottom contact blade (21) and the second bottom contact blade (23) is greater than or equal to a second distance (d2) between the first bottom contact blade (21) and the first top contact blade (22).

9. Electrical power supply disconnector (50) according to either one of Claims 7 and 8, **characterized in that** a third distance (d3) between the first bar (2) and the first bottom contact blade (21) or the first top contact blade (22) is greater than half the second distance (d2) when the first bar (2) is in the second position.

10. Electrical power supply disconnector (50) according to any one of Claims 1 to 9, **characterized in that** it further comprises a manoeuvring rod (20) and the slide (1) comprises first hooks (8) disposed at one of its ends to form a first device for attachment to the manoeuvring rod (20).

11. Electrical power supply disconnector (50) according to Claim 10, **characterized in that** the manoeuvring rod (20) comprises second hooks (28) at one of its ends to form a second attachment device cooperating with the first hooks (8) of the first attachment device, the second hooks (22) being arranged to be attached to the first hooks (8) during a translation along the central axis (X) to mechanically secure the manoeuvring rod (20) and the slide (1).

12. Electrical power supply disconnector (50) according to Claim 11, **characterized in that** the first hooks (8) and/or the second hooks (28) are arranged to be deformed upon an attachment manoeuvre between the slide (1) and the manoeuvring rod (20) and to revert to their original form to remain attached to one another in order to mechanically secure the manoeuvring rod (20) and the slide (1).

13. Electrical power supply disconnector (50) according to any one of Claims 10 to 12, **characterized in that** the manoeuvring rod (20) comprises a rotary lock (26) arranged to keep the slide (1) mechanically secured to the manoeuvring rod (20) in the first position when the rotary lock (22) is in a locked position.

14. Electrical power supply disconnector (50) according to Claim 13, **characterized in that** the manoeuvring rod (20) comprises a spring (25) oriented along the central axis (X), exerting a thrust (F) on the manoeuvring rod (20) to drive the slide (1) mechanically secured to the manoeuvring rod (20) from the first position to the second position.

15. Electrical power supply disconnector (50) according to Claim 14, **characterized in that** the spring (25) exerts the thrust (F) on the manoeuvring rod (20) to drive the slide (1), mechanically secured to the manoeuvring rod, from the first position to the second position when the rotary lock (26) is in an unlocked position.

16. Protection module (30) protecting against electrical faults intended to cooperate with an electrical current switching device (40), said protection module (30) comprising:
- at least one sensor (31) disposed around at least one current conductor (34) to supply a signal representative of the electrical current,
- a processing unit (32), connected to the sensor (31), for processing the signal from the sensor and generating a measure,
- a power supply circuit (33) for the processing unit (32), and
- current conductors (34),
said protection module protecting against electrical faults being **characterized in that** it comprises an electrical power supply disconnector (50) according to any one of Claims 1 to 15, said electrical power supply disconnector (50) being connected in series between the at least one current conductor (34) and the power supply circuit (33) for the processing unit (32) to make or break the connection between the at least one current conductor (34) and the power supply circuit (33).
